(19) Europäisches Patentamt
European Patent Office
Office européen des brevets

(11) Veröffentlichungsnummer: **0 542 184 B1**

(12) **EUROPÄISCHE PATENTSCHRIFT**

(45) Veröffentlichungstag der Patentschrift: **07.06.95**

(51) Int. Cl.$^{6}$: **B32B 27/34**, B32B 27/36, B32B 1/08, F16L 11/04, F16L 9/12

(21) Anmeldenummer: **92119181.3**

(22) Anmeldetag: **10.11.92**

(54) **Mehrschichtiges Kunststoffrohr.**

(30) Priorität: **14.11.91 DE 4137431**

(43) Veröffentlichungstag der Anmeldung:
**19.05.93 Patentblatt 93/20**

(45) Bekanntmachung des Hinweises auf die Patenterteilung:
**07.06.95 Patentblatt 95/23**

(84) Benannte Vertragsstaaten:
**DE ES FR GB IT NL SE**

(56) Entgegenhaltungen:
**EP-A- 0 325 030**
**EP-A- 0 509 212**
**WO-A-87/02680**
**DE-A- 3 510 395**
**DE-A- 3 827 092**
**US-A- 3 561 493**

**DATABASE WPIL Week 3992, Derwent Publications Ltd., London, GB; AN 92-320031 & JP-A-4 224 384**

(73) Patentinhaber: **HÜLS AKTIENGESELLSCHAFT**

**D-45764 Marl (DE)**

(72) Erfinder: **Mügge, Joachim, Dr.**
**Kantstrasse 14**
**W-4358 Haltern (DE)**
Erfinder: **Röber, Stefan, Dr.**
**Max-Reger-Strasse 138**
**W-4370 Marl (DE)**
Erfinder: **Herrmann, Hans-Dieter**
**Pommernstrasse 9**
**W-4370 Marl (DE)**
Erfinder: **Ries, Hans, Dr.**
**Begonienstrasse 9**
**W-4370 Marl (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 542 184 B1

## Beschreibung

Gegenstand der Erfindung ist ein mehrschichtiges Kunststoffrohr.

Kunststoffrohre aus Polyamid sind bekannt und werden für vielseitige Anwendungszwecke eingesetzt. Um ihre Aufgabe zu erfüllen, müssen die Rohre u. a. inert gegen das in ihnen fließende Medium, bestärdig gegen hohe und tiefe Temperaturen sowie mechanische Belastungen sein.

Einschichtige Rohre sind nicht immer in der Lage, die notwendigen Anforderungen zu erfüllen. Beim Transport von z. B. aliphatischen oder aromatischen Lösemitteln, Kraftstoffen o. ä. zeigen sie erhebliche Nachteile wie mangelhafte Sperrwirkung gegen das Medium, unerwünschte Dimensionsänderungen oder zu geringe mechanische Belastbarkeit.

Es wurde versucht, diese Nachteile durch mehrschichtige Rohre auszuräumen (DE-OSS 35 10 395, 37 15 251, 38 21 723, 38 27 092). Die praktische Anwendung dieser Vorschläge hat jedoch gezeigt, daß zwar einzelne Nachteile vermieden werden können, daß aber das Gesamteigenschaftsbild immer noch nicht befriedigt.

Die DE-A-3 510 395 beschreibt ein Mehrschichtrohr zum Transportieren von Kraftstoffen das aus folgenden Schichten besteht:

1) einer Innenschicht aus Polyamid;
2) einer Schicht aus EVOH;
3) einer Außenschicht aus Polyamid.

Die DE-A-38 27 092 beschreibt ein Mehrschichtrohr, das aus folgenden Schichten besteht:

1) einer Innenschicht aus Polyamid;
2) einer Schicht aus EVOH;
3) einer Schicht aus Polyamid;
4) einer Außenschicht aus Polyester.

In der EP-A-0 509 212 werden Mehrschichtrohre beschrieben, deren Innen- und Außenschicht aus Polyamid besteht, wobei Innen- und Außenschicht durch eine Zwischenschicht aus einem Gemisch eines linearen, kristallinen Polyesters und eines Polyamids kraftschlüssig miteinar der verbunden sind. Die Sperrwirkung gegenüber Kraftstoffen genügt jedoch noch nicht den Anforderungen.

Aufgabe der Erfindung war es, ein Polyamidrohr mit einer guten Sperrwirkung gegen das transportierte Medium, einer zufriedenstellenden Maßhaltigkeit sowie einer befriedigenden mechanischen Belastbarkeit zu entwikkeln.

Diese Aufgabe wird gelöst durch ein mehrschichtiges Kunststoffrohr, indem es

A. aus einer Innen- und Außenschicht auf Basis einer Formmasse aus Polyamid besteht,

und beide Schichten

B. durch mindestens eine Zwischenschicht aus einer Formmasse auf Basis eines Gemisches aus

a. 95 bis 60 Gew.-% eines linearen, kristallinen Polyesters

und

b. 5 bis 40 Gew.-% eines reaktive Gruppen aufweisenden Polymeren, - ausgenommen solche mit Epoxigruppen,

wobei die der Komponente b. entstammenden reaktiver Gruppen in der Komponente B. in einer Konzentration zwischen 4 und 95 mmol/kg enthalten sind,

kraftschlüssig miteinander verbunden sind.

Ein ähnliches mehrschichtiges Kunststoffrohr wird in der EP-A-0 542 185 mit Priorität vom gleichen Tage beschrieben. Dort werden die Innen- und die Außenschicht auf Basis einer formmasse aus Polyamid durch eine Zwischenschicht aus einer Formmasse auf Basis eines linearen, kristallinen Polyesters miteinander verbunden. Bei der vorliegender Erfindung ist demgegenüber in der Zwischenschicht zusätzlich zum Polyester das reaktive Gruppen aufweisende Polymere enthalten.

Als Polyamide (Komponente A.) kommen in erster Linie aliphatische Homo- und Copolykondensate in Frage. Als Beispiel seien die 4.6-; 6.6-; 6.12-; 8.10-; 10.10-Polyamide o. ä. genannt. Bevorzugt werden 6-; 10.12-; 11-; 12- sowie 12.12-Polyamide. [Die Kennzeichnung der Polyamide entspricht internationaler Norm, wobei die erste(n) Ziffer(n) die C-Atomzahl des Ausgangsdiamins und die letzte(n) Ziffer(n) die C-Atomzahl der Dicarbonsäure angeben. Wird nur eine Zahl genannt, so bedeutet dies, daß von einer alpha,omega -Aminocarbonsäure bzw. von dem davon abgeleiteten Lactam ausgegangen worden ist - H. Domininghaus, **"Die Kunststoffe und ihre Eigenschaften"**, Seite 272, VDI-Verlag (1976).]

Sofern Copolyamide verwendet werden, können diese z. B. Adipinsäure, Sebacinsäure, Korksäure, Isophthalsäure, Terephthalsäure als Cosäure bzw. Bis(4-aminocyclohexyl)-methan, Trimethylhexamethylendiamin, Hexamethylendiamin o. ä. Codiamin enthalten.

Die Herstellung dieser Polyamide ist bekannt (z. B. D. B. Jacobs, J. Zimmermann, **Polymerization Processes**, S. 424-67; Interscience Publishers, New York (1977); DE-AS 21 52 194).

Ebenfalls geeignet als Polyamide sind gemischte aliphatische/aromatische Polykondensate wie sie z. B. in den US-PSS 2 071 250; 2 071 251; 2 130 523; 2 130 948; 2 241 322; 2 312 966; 2 512 606; 3 393 210 bzw. in Kirk-Othmer, **Encyclopedia of Chemical Technology**, 3. Aufl., Vol. 18, Seite 328 und 435 - Wiley & Sons (1982) beschrieben werden. Als Polyamide geeignete Polykondensate sind gleichfalls Poly-(etheresteramide) bzw. Poly(etheramide). Derartige Produkte werden z. B. in DE-OSS 27 12 987, 25 23 991, 30 06 961 beschrieben.

Das Molekulargewicht (Zahlenmittel) der Polyamide liegt oberhalb von 5 000, vorzugsweise oberhalb von 10 000 - entsprechend einer relativen Viskosität ($\eta_{rel}$) im Bereich von 1,5 bis 2,8.

Die genannten Polyamide werden für sich oder in Gemischen eingesetzt.

Insbesondere werden erfindungsgemäß Polyamide (Komponente A.) eingesetzt, bei denen mindestens 50 %, vorzugsweise 70 % aller im Polyamid vorhandenen Endgruppen Aminoendgruppen darstellen. Darüber hinaus ist es von Vorteil, wenn die Aminoendgruppenkonzentration in der Komponente A. sich im Bereich von 30 bis 130 mmol/kg, vorzugsweise 60 bis 110 mmol/kg bewegt.

Die linearen, kristallinen Polyester (Komponente B. a.) weisen nachstehende Grundstruktur auf

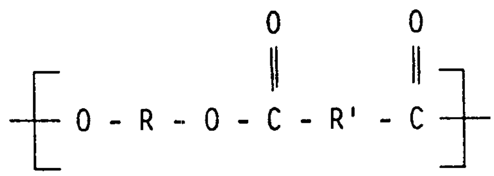

;

dabei stellt R einen divalenten verzweigten oder nichtverzweigten aliphatischen und/oder cycloaliphatischen Rest mit 2 bis 12, vorzugsweise 2 bis 8, C-Atomen in der Kohlenstoffkette und R' einen divalenten aromatischen Rest mit 6 bis 20, vorzugsweise 8 bis 12, C-Atomen im Kohlenstoffgerüst dar.

Als Beispiel für Diole seien Ethylenglykol, Trimethylenglykol, Tetramethylenglykol, Hexamethylenglykol, Neopentylglykol, Cyclohexandimethanol o. ä. genannt.

Bis zu 25 Mol-% des genannten Diols können durch ein zweites, bereits oben genanntes Diol oder durch ein Diol mit nachstehender allgemeiner Formel

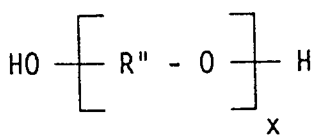

,

wobei R" einen zweiwertigen Rest mit 2 bis 4 C-Atomen bedeutet und x einen Wert von 2 bis 50 annehmen kann, ersetzt sein.

Bevorzugt als Diole werden Ethylenglykol und Tetramethylenglykol eingesetzt.

Als aromatische Dicarbonsäure kommen z. B. Terephthalsäure, Isophthalsäure, 1.4-, 1.5-, 2.6- bzw. 2.7-Naphthalindicarbonsäure, Diphensäure, Diphenylether-4.4'-dicarbonsäure in Frage.

Bis zu 20 Mol-% dieser Dicarbonsäuren können durch aliphatische Dicarbonsäuren wie z. B. Bernsteinsäure, Maleinsäure, Fumarsäure, Sebacinsäure, Dodecandisäure u. a. ersetzt sein.

Die Herstellung der linearen, kristallinen Polyester gehört zum Stand der Technik (DE-OSS 24 07 155, 24 07 156; **Ullmanns Encyclopädie der technischen Chemie**, 4. Aufl., Bd. 19, Seite 65 ff. - Verlag Chemie GmbH, Weinheim, 1980).

Die erfindungsgemäß eingesetzten Polyester weisen eine Viskositätszahl (J-Wert) im Bereich von 80 bis 240 $cm^3/g$ auf.

Die Polyamide (Komponente A.) und/oder die linearen, kristallinen Polyester (Komponente B. a.) können bis zu 40 Gew.-% andere Thermoplaste enthalten, sofern diese die Verbundfähigkeit nicht stören. Insbesondere seien hier Polycarbonat (H. Schnell, **Chemistry and Physics of Polycarbonates**, Interscience Publishers, New York 1981), Acrylnitril/Styrol/Butadien-(Houben-Weyl, **Methoden der organischen Chemie**, Bd. 14/1, Georg Thieme Verlag Stuttgart, S. 393 - 406; **Ullmanns Encyclopädie der technischen Chemie**, 4. Auflage, Bd. 19, Verlag Chemie Weinheim (1981), S. 279 - 284), Acrylnitril/Styrol/Acrylat-

(**Ullmanns Encyclopädie der technischen Chemie**, 4. Auflage, Bd. 19, Verlag Chemie Weinheim (1981), S. 277 - 295), Acrylnitril/Styrol-Copolymerisat (**Ullmanns Encyclopädie der technischen Chemie** 4. Auflage, Bd. 19, Verlag Chemie Weinheim (1981), S. 273 ff.) oder Polyphenylenether (DE-OSS 32 24 691 u. 32 24 692, US-PSS 3 306 874, 3 306 875 u. 4 028 341) genannt.

Sofern erforderlich können die Polyamide und/oder Polyester schlagzäh eingestellt werden. Geeignete Polymere sind z. B. Ethylen/Propylen- oder Ethylen/Propylen/Dien-Copolymere (EP-A-295 076), Polypentenylen, Polyoctenylen oder statistische bzw. blockartig aufgebaute Copolymere aus alkenylaromatischen Verbindungen mit aliphatischen Olefinen oder Dienen (EP-A-261 748). Weiterhin seien schlagzähmachende Kautschuke genannt: Kern/Schale-Kautschuke mit einem zähelastischen Kern aus (Meth)Acrylat-, Butadien- oder Styrol/Butadien-Kautschuk mit Glastemperaturen $T_g < -10$ °C, wobei der Kern vernetzt sein kann. Die Schale kann aus Styrol und/oder Methylmethacrylat und/oder weiteren, ungesättigten Monomeren aufgebaut sein (DE-OSS 21 44 528, 37 28 685).

Als Komponente B. b. werden Polymere eingesetzt, die reaktive Gruppen aufweisen, welche in der Lage sind, mit den reaktiven Gruppen eines Polyesters bzw. eines Polyamides zu reagieren. Unter reaktiven Gruppen werden Carboxyl-, Anhydrid-, Ester-, N-Acyl-Lactam-, Oxazolin-Gruppen verstanden. Insbesondere geeignet sind Carbonsäureanhydridgruppen. Bevorzugt werden kautschukelastische Polymere.

Als für die Komponente B. b. geeignete Polymere seien beispielsweise genannt: Styrol/Maleinsäure-, Styrol/(Meth)Acrylsäure-, Styrol/Butylacrylat/(Meth)Acrylsäure, Ethylen/(Meth)Acrylsäure-, Ethylen/Butylacrylat/(Meth)Acrylsäure-Copolymere o. ä.

Ferner kommen Pfropfcopolymere mit Ethylen/Propylen-, Ethylen/Propylen/Dien-, Styrol/Butadien-Block-, Styrol/Butadien-, Styrol-Block-, Styrol/Ethylen/Butylen-Block-, Styrol/Acrylatester-Copolymere oder Butadien-, Acrylat- oder Silikonkautschuke oder Polytransoctenylen als Pfropfgrundlage in Frage.

Erfindungsgemäß geeignete Pfropfmonomere sind beispielsweise (Meth)Acrylsäure, Maleinsäure(anhydrid), Vinyloxazolin, Methacryloyllaurinlactam.

Die genannten, reaktive Gruppen aufweisenden Polymere sowie ihre Herstellung sind grundsätzlich bekannt [EP-OSS 164 179, 173 380, 210 307, 404 261; US-PS 3 953 655; F.R. Eirick, **Science and Technology of Rubber**, Academic Press, New York (1978), pp 43 - 48, 65 - 71, 455 - 487; M. Fedtke, **Reaktionen an Polymeren**, VEB Deutscher Verlag für Grundstoffindustrie, Leipzig, (1985); G. Allen, **Comprehensive Polymer Science**, Pergamon Press, Oxford, (1988), pp 2 - 42, 403 - 419; P. Svec, **Styrene-based Plastics and their Modification**, Ellis Horwood, New York, (1989)].

Die Zwischenschicht (Komponente B.) setzt sich zusammen aus 95 bis 60, vorzugsweise 95 bis > 70, und insbesondere aus 90 bis 80 Gew.-% an Komponente B. a. und 5 bis 40, vorzugsweise 5 bis < 30, und insbesondere aus 10 bis 20 Gew.-% an Komponente B. b. Eine weitere wesentliche Voraussetzung ist, daß die der Komponente B. b. entstammenden reaktiven Gruppen in der Zwischenschicht in einer Konzentration zwischen 4 und 95 mmol/kg, vorzugsweise zwischen 6 und 75 mmol/kg vorliegen.

Die Herstellung der Komponente B. erfolgt nach üblichen und bekannten Verfahren durch Schmelzemischen der Komponenten B. a. und B. b. in einem gut knetenden Mischaggregat, wie z. B. einem Doppelschneckenkneter, bei Temperaturen zwischen 200 und 300 °C.

Der Komponente A. sowie Komponente B. können übliche Hilfs- und Zusatzstoffe wie z. B. Flammschutzmittel, Stabilisatoren, Verarbeitungshilfsmittel, Viskositätsverbesserer, Füllstoffe, Pigmente o. ä. zugefügt werden. Die Menge an Hilfs- und Zusatzstoffen, insbesondere an Verarbeitungshilfsmitteln muß so gewählt werden, daß der Verbund zwischen Polyamid und Polyester nicht wesentlich beeinflußt wird.

Die Herstellung der mehrschichtigen Kunststoffrohre erfolgt in bekannter, wie z. B. weiter oben im Stand der Technik beschriebenen Weise.

Die erfindungsgemäßen mehrschichtigen Kunststoffrohre weisen in hervorragendem Maße eine gute Beständigkeit sowie gute Sperrwirkung gegen Diffusion gegenüber den transportierten Medien, insbesondere chemischen Agenzien, Lösemitteln und Kraftstoffen auf. Ferner sind die Polyamidschichten durch die Zwischenschicht so kraftschlüssig miteinander verbunden, daß z. B. bei thermischer Ausdehnung oder Biegen des Rohres kein Abscheren der verschiedenen Schichten voneinander auftritt. Neben einem 3-Schichtrohr können auch Rohre hergestellt werden, die aus z. B. 5 oder 7 Schichten bestehen, indem weitere Schichten der Komponente A. bzw. B. zusätzlich eingearbeitet werden.

Die in den Beispielen aufgeführten Ergebnisse wurden mit Hilfe nachstehender Meßverfahren bestimmt.

Die **Bestimmung der Lösungsviskosität** (rel. Viskosität $\eta_{rel}$) **der Polyamide** erfolgt unter Verwendung einer 0,5 Gew.-%igen m-Kresol-Lösung bei 25 °C gemäß DIN 53 727/ISO 307.

Die **Bestimmung der Lösungsviskosität** (Viskositätszahl J) **der Polyester** erfolgt unter Verwendung einer 0,5 Gew.-%igen Lösung in einem o-Dichlorbenzol/Phenol-Gemisch (50 : 50 Gewichtsteile) bei 25 °C gemäß DIN 53 728/ISO 1628 - Teil 5.

Zur **Bestimmung der Aminoendgruppen** wird 1 g der Komponente A. in 50 ml m-Kresol bei 25 °C gelöst. Die Lösung wird mit Perchlorsäure potentiometrisch titriert.

Zur **Bestimmung der Carboxylendgruppen** in der Komponente A. bzw. B. wird 1 g Polykondensat in 50 ml Benzylalkohol unter Stickstoffabdeckung bei 165 °C gelöst. Die Lösezeit beträgt maximal 20 min. Die Lösung wird mit einer Lösung von KOH in Ethylenglycol (0,05 mol KOH/l) gegen Phenolphthalein bis zum Farbumschlag titriert.

Die **Bestimmung der reaktiven Gruppen** in der Komponente B. b. erfolgt je nach Art der reaktiven Gruppe. Bei Maleinsäureanhydrid wird der Gehalt IR-spektroskopisch (Anhydridbande bei 1790 $cm^{-1}$) ermittelt.

Die **Bestimmung der Diffusion** von Kraftstoffanteilen erfolgt an Folien, indem 50 ml eines Kraftstoffgemisches (Kraftstoff M 15 - 42,5 Vol.Tle. Isooctan, 42,5 Vol.Tle. Toluol und 15 Vol.Tle. Methanol) in ein zylindrisches Gefäß (⌀ 5 cm, Höhe 3 cm) gefüllt werden, das dicht mit der zu prüfenden Folie verschlossen ist. Die Diffusion wird bei 23 ± 1 °C als Masseverlust durch Diffusion über die Zeit (Messung alle 24 h) ermittelt. Der pro Fläche registrierte Masseverlust wird wie folgt bewertet:

- **gut:** Diffusion < 175 $g \cdot d^{-1} \cdot m^{-2}$
- **mittel:** Diffusion ≧ 175 $g \cdot d^{-1} \cdot m^{-2}$ und ≦ 300 $g \cdot d^{-1} \cdot m^{-2}$
- **schlecht:** Diffusion > 300 $g \cdot d^{-1} \cdot m^{-2}$

Die **Bestimmung der Kraftschlüssigkeit** zwischen den einzelnen Schichten wird anhand von mehrschichtigen Rohren bzw. Folien vorgenommen. Dabei wird versucht, die Schichten manuell voneinander zu trennen, d. h. durch Knicken der Rohre bzw. Folien mit anschließendem Ablöseversuch mit einem Schneidwerkzeug und Gitterschnitt. Rohre und Folien werden dann als "gut" eingestuft, wenn keine Ablösung zwischen den Schichten erfolgt. Eine Ablösung innerhalb einer Schicht führt zu der gleichen Einstufung. Als "schlecht" werden Rohre und Folien bezeichnet, bei denen eine Ablösung zwischen zwei Schichten erfolgt.-

Mit Buchstaben gekennzeichnete Versuche sind nicht erfindungsgemäß.

## Beispiele

### A. Komponente A

**PA 1:** Polyamid 12 ($\eta_{rel}$: 2,08; 30 % der Endgruppen Aminogruppen; 16 mmol/kg Aminoendgruppen; 36 mmol/kg Carboxyl-Endgruppen)

**PA 2:** Polyamid 12 ($\eta_{rel}$: 2,10; 30 % der Endgruppen Aminogruppen; 15 mmol/kg Aminoendgruppen; 34 mmol/kg Carboxyl-Endgruppen; modifiziert mit 15 Gew.-Tln. handelsüblichem Weichmacher pro 100 Gew.-Tle. Polyamid 12)

**PA 3:** Polyamid 12 ($\eta_{rel}$: 1,9; 86 % der Endgruppen Aminogruppen; 60 mmol/kg Aminoendgruppen; 10 mmol/kg Carboxyl-Endgruppen)

**PA 4:** Polyamid 6.12 ($\eta_{rel}$: 1,9; 88 % der Endgruppen Aminogruppen; 93 mmol/kg Aminoendgruppen; 13 mmol/kg Carboxyl-Endgruppen)

**PA 5:** Polyamid 6.6 ($\eta_{rel}$: 1,81; 78,4 % der Endgruppen Aminogruppen; 105 mmol/kg Aminoendgruppen; 29 mmol/kg Carboxyl-Endgruppen)

**PA 6:** Polyamid 6 ($\eta_{rel}$: 2,01 ; 51,6 % der Endgruppen Aminogruppen; 33 mmol/kg Aminoendgruppen; 31 mmol/kg Carboxyl-Endgruppen)

### B. Komponente B.

**Z 1:** Ethylen/Vinylalkohol-Copolymerisat - EVAL$^{R}$ EP-E 105 A

**Z 2:** Polyethylen - VESTOLEN$^{R}$A 4042

**Z 3:** Blend aus

a. 80 Gew.-% Homopolybutylenterephthalat (J-Wert: 110 $cm^3/g$)
und
b. 20 Gew.-% maleinsäuremodifiziertem EPM (Gehalt an Maleinsäureanhydrid: 0,7 Gew.-% - bezogen auf Komponente b.; Anhydridgruppengehalt: 14 mmol/kg - bezogen auf die Komponente B.)

**Z 4:** Blend aus

a. 90 Gew.-% Homopolybutylenterephthalat (J-Wert: 110 $cm^3/g$)
und

b. 10 Gew.-% maleinsäuremodifiziertem EPM (Gehalt an Maleinsäureanhydrid: 0,7 Gew.-% - bezogen auf Komponente b.; Anhydridgruppengehalt: 7 mmol/kg - bezogen auf die Komponente B.)

## C. Herstellung von Folien und Rohren

Die Folien werden auf einer Labordreischichtfolienanlage mit einer 400-mm-Dreischichtfoliendüse und einem nachgeschalteten Dreiwalzenglättwerk hergestellt. Die Extrudertemperatur bei der Herstellung der Folien wird auf 185 °C (PA 2); 200 °C (PA 1 und PA 3); 220 °C (Z 2); 225 °C (Z 1) und 240 °C (PA 4; Z 1 und Z 3) eingestellt.

Die Rohre mit den Abmessungen 8 mm (Außendurchmesser) x 1 mm (Gesamtwandstärke) und einem dreischichtigen Aufbau werden auf einer Laborrohrextrusionsanlage mit einem Fünfschichtrohrwerkzeug (2 Kanäle geschlossen) hergestellt (Außenschicht: ca. 0,75 mm, Zwischenschicht: ca. 0,15 mm, Innenschicht: ca. 0,1 mm). Die Speiseextruder weisen alle einen Schneckendurchmesser von 25 mm auf. Die Zylindertemperaturen lagen bei 230 °C (PA 1 und PA 3; Z 1), 240 °C (PA 4), 260 °C (Z 3 bis Z 5), 290 °C (PA 5).

| Versuch | | Innenschicht | Zwischenschicht | Außenschicht | Kraftschlüssigkeit | Diffusion $[g \cdot d^{-1} \cdot m^{-2}]$ |
|---|---|---|---|---|---|---|
| 1 | F*) | PA 3 | Z 3 | PA 3 | gut | gut |
| 2 | F | PA 4 | Z 3 | PA 4 | gut | gut |
| 3 | F | PA 3 | Z 4 | PA 3 | gut | gut |
| 4 | R*) | PA 3 | Z 3 | PA 3 | gut | gut |
| 5 | R | PA 4 | Z 4 | PA 4 | gut | gut |
| A | F | PA 1 | Z 1 | PA 1 | schlecht | mittel |
| B | F | PA 2 | Z 2 | PA 3 | schlecht | gut |
| C | F | PA 1**) | - | - | - | schlecht |
| D | F | PA 2**) | - | - | - | schlecht |
| E | R | PA 1 | Z 1 | PA 1 | schlecht | - |

*) F = Mehrschichtfolie (Gesamtschichtdicke: ca. 0,1 mm)
R = Mehrschichtrohr

**) Einschichtfolie (Schichtdicke: ca. 0,1 mm)

## Patentansprüche

1. Mehrschichtiges Kunststoffrohr zum Transportieren von aliphatischen oder aromatischen Lösemitteln beziehungsweise Kraftstoffen, dessen Innen- und Außenschicht aus einer Formmasse aus Polyamid, gegebenenfalls bis zu 40 Gew.-% anderen Thermoplasten sowie gegebenenfalls üblichen Hilfs- und Zusatzstoffen besteht,
derart ausgebildet,
daß die Innen- und die Außenschicht durch mindestens eine Zwischenschicht kraftschlüssig miteinander verbunden sind, welche aus einen Gemisch aus

a. 95 bis 60 Gew.-% eines linearen, kristallinen Polyesters mit einer Viskositätszahl (J-Wert) von 80 bis 240 $cm^3/g$, der gegebenenfalls bis zu 40 Gew.-% durch andere Thermoplaste ersetzt sein kann, sowie gegebenenfalls üblichen Hilfs- und Zusatzstoffen
und
b. 5 bis 40 Gew.-% eines Polymeren mit Carboxyl-, Anhydrid-, Ester-, N-AcylLactam- oder Oxazolin-Resten als reaktive Gruppe - ausgenommen sind Polyamide und Polymere mit Epoxigruppen,
besteht,
wobei die der Komponente b. entstammenden reaktiven Gruppen in der Zwischenschicht in einer Konzentration zwischen 4 und 95 mmol/kg enthalten sind.

**2.** Mehrschichtiges Kunststoffrohr nach Anspruch 1,
dadurch gekennzeichnet,
daß die Innen- und Außenschicht aus einer Formmasse auf Basis von Polyamid besteht, wobei mindestens 50 % aller im Polyamid vorhandenen Endgruppen Aminoendgruppen darstellen.

**3.** Mehrschichtiges Kunststoffrohr nach Anspruch 1,
dadurch gekennzeichnet,
daß die Innen- und Außenschicht aus einer Formasse auf Basis von Polyamid besteht, wobei mindestens 70 % aller im Polyamid vorhandenen Endgruppen Aminoendgruppen darstellen.

**4.** Mehrschichtiges Kunststoffrohr nach den Ansprüchen 1 bis 3,
dadurch gekennzeichnet,
daß in der Innen- und Außenschicht die Aminoendgruppenkonzentration im Bereich von 30 bis 130 mmol/kg liegt.

**5.** Mehrschichtiges Kunststoffrohr nach den Ansprüchen 1 bis 3,
dadurch gekennzeichnet,
daß in der Innen- und Außenschicht die Aminoendgruppenkonzentration im Bereich von 60 bis 110 mmol/kg liegt.

**6.** Mehrschichtiges Kunststoffrohr nach den Ansprüchen 1 bis 5,
dadurch gekennzeichnet,
daß die Zwischenschicht aus einer Formmasse auf Basis eines Gemisches aus
a. 95 bis > 70 Gew.-% eines linearen, kristalliner Polyesters
und
b. 5 bis < 30 Gew.-% eines reaktive Gruppen aufweisenden Polymeren besteht.

**7.** Mehrschichtiges Kunststoffrohr nach den Ansprüchen 1 bis 5, dadurch gekennzeichnet,
daß die Zwischenschicht aus einer Formmasse auf Basis eines Gemisches aus
a. 90 bis 80 Gew.-% eines linearen, kristallinen Polyesters
und
b. 10 bis 20 Gew.-% eines reaktive Gruppen aufweisenden Polymeren besteht.

**8.** Mehrschichtiges Kunststoffrohr nach den Ansprüchen 1 bis 7,
dadurch gekennzeichnet,
daß die der Komponente b. entstammenden reaktiven Gruppen in der Zwischenschicht in einer Konzentration zwischen 6 und 75 mmol/kg vorliegen.

**9.** Mehrschichtiges Kunststoffrohr nach den Ansprüchen 1 bis 8,
dadurch gekennzeichnet,
daß die Komponente b. der Zwischenschicht ein kautschukelastisches Polymeres darstellt.

**10.** Verwendung des mehrschichtigen Kunststoffrohres nach den Ansprüchen 1 bis 9 für den Stofftransport chemischer Agenzien.

**11.** Verwendung des mehrschichtigen Kunststoffrohres nach den Ansprüchen 1 bis 9 auf dem Kraftfahrzeugsektor.

## Claims

1. A multilayer plastic pipe for transporting aliphatic or aromatic solvents or fuels, whose inner and outer layers are composed of a moulding composition of polyamide, if desired up to 40 % by weight of other thermoplastics and, if desired, customary auxiliaries and additives, constructed in such a way that the inner and the outer layer are intimately bonded to one another by at least one intermediate layer which is composed of a mixture of
   a. from 95 to 60 % by weight of a linear, crystalline polyester having a viscosity number (J value) of from 80 to 240 $cm^3/g$, which can, if desired, be replaced by up to 40 % by weight of other thermoplastics, and also, if desired, customary auxiliaries and additives
   and
   b. from 5 to 40 % by weight of a polymer containing carboxyl, anhydride, ester, N-acyl-lactam or oxazoline radicals as reactive group, excluding polyamides and polymers containing epoxy groups,

   the reactive groups originating from component b. being present in the intermediate layer in a concentration of between 4 and 95 mmol/kg.

2. A multilayer plastic pipe according to claim 1, characterized in that the inner and outer layers are composed of a moulding composition based on polyamide, at least 50% of all the end groups present in the polyamide being amino end groups.

3. A multilayer plastic pipe according to claim 1, characterized in that the inner and outer layers are composed of a moulding composition based on polyamide, at least 70% of all the end groups present in the polyamide being amino end groups.

4. A multilayer plastic pipe according to any of claims 1 to 3, characterized in that the concentration of amino end groups in the inner and outer layers is in the range from 30 to 130 mmol/kg.

5. A multilayer plastic pipe according to any of claims 1 to 3, characterized in that the concentration of amino end groups in the inner and outer layers is in the range from 60 to 110 mmol/kg.

6. A multilayer plastic pipe according to any of claims 1 to 5, characterized in that the intermediate layer is composed of a moulding compositions based on a mixture of
   a. 95 to > 70% by weight of a linear, crystalline polyester
   and
   b. 5 to < 30% by weight of a polymer containing reactive groups.

7. A multilayer plastic pipe according to any of claims 1 to 5, characterized in that the intermediate layer is composed of a moulding composition based on a mixture of
   a. 90 to 80% by weight of a linear, crystalline polyester
   and
   b. 10 to 20% by weight of a polymer containing reactive groups.

8. A multilayer plastic pipe according to any of claims 1 to 7, characterized in that the reactive groups originating from component b. are present in the intermediate layer in a concentration of between 6 and 75 mmol/kg.

9. A multilayer plastic pipe according to any of claims 1 to 8, characterized in that component b. of the intermediate layer is a rubber-elastic polymer.

10. Use of the multilayer plastic pipe according to any of claims 1 to 9 for substance transportation of chemical agents.

11. Use of the multilayer plastic pipe according to any of claims 1 to 9 in the motor vehicle sector.

## Revendications

1. Tuyau multicouche en matière synthétique pour transporter des solvants aliphatiques ou aromatiques ainsi que des carburants, dont la couche interne et la couche externe sont constituées par une masse

de moulage en polyamide, par éventuellement jusqu'à 40 % en poids d'autres thermoplastes, ainsi que, le cas échéant, par des adjuvants et additifs usuels,
caractérisé en ce que la couche interne et la couche externe sont étroitement reliées entre elles par au moins une couche intermédiaire qui est constituée par un mélange formé

a. de 95 à 60 % en poids d'un polyester linéaire cristallin d'un indice de viscosité (valeur J) de 80 à 240 $cm^3$ par gramme, qui peut être éventuellement remplacé par une quantité allant jusqu'à 40 % en poids d'autres thermoplastes, ainsi qu'éventuellement d'adjuvants et additifs usuels,
et
b. de 5 à 40 % en poids d'un polymère comportant des radicaux carboxyle, anhydride, ester, N-acyle-lactame ou oxazoline en tant que groupe réactif, à l'exception des polyamides et polymères comportant des groupes époxyde,

les groupes réactifs provenant du composant b) étant contenus dans la couche intermédiaire dans une concentration comprise entre 4 et 95 m.moles par kilogramme.

**2.** Tuyau multicouche en matière synthétique selon la revendication 1,
caractérisé en ce que la couche interne et la couche externe sont constituées par une masse de moulage à base de polyamide, 50 % au moins de tous les groupes terminaux présents dans la polyamide représentant des groupes terminaux aminés.

**3.** Tuyau multicouche en matière synthétique selon la revendication 1,
caractérisé en ce que la couche interne et la couche externe sont constituées par une masse de moulage à base de polyamide, 70 % au moins de tous les groupes terminaux présents dans la polyamide représentant des groupes terminaux aminés.

**4.** Tuyau multicouche en matière synthétique selon les revendications 1 à 3,
caractérisé en ce que dans la couche interne et la couche externe, la concentration en groupes terminaux aminés se ans un domaine de 30 à 130 m.moles par kilogramme.

**5.** Tuyau multicouche en matière synthétique selon les revendications 1 à 3,
caractérisé en ce que dans la couche interne et la couche externe, la concentration en groupes terminaux aminés se situe dans un domaine de 60 à 110 m.moles par kilogramme.

**6.** Tuyau multicouche en matière synthétique selon les revendications 1 à 5,
caractérisé en ce que la couche intermédiaire est constituée par une masse de moulage à base d'un mélange formé

a. de 95 à plus de 70 % en poids d'un polyester cristallin linéaire
et
b. de 5 à moins de 30 % en poids d'un polymère présentant des groupes réactifs.

**7.** Tuyau multicouche en matière synthétique selon les revendications 1 à 5,
caractérisé en ce que la couche intermédiaire est contstituée par une masse de moulage à base d'un mélange formé

a. de 90 à 80 % en poids d'un polyester cristallin linéaire
et
b. de 10 à 20 % en poids d'un polymère présentant des groupes réactifs.

**8.** Tuyau multicouche en matière synthétique selon les revendications 1 à 7,
caractérisé en ce que les groupes réactifs qui proviennent du composant b. se présentent dans la couche intermédiaire dans une concentration comprise entre 6 et 75 m.moles par kilogramme.

**9.** Tuyau multicouche en matière synthétique selon les revendications 1 à 8,
caractérisé en ce que le composant b. de la couche intermédiaire représente un polymère présentant l'élasticité du caoutchouc.

**10.** L'utilisation du tuyau multicouche en matière synthétique selon les revendications 1 à 9 pour le transport d'agents chimiques.

**11.** L'utilisation du tuyau multicouche en matière synthétique selon les revendications 1 à 9 dans le secteur des camions.